# EUROPÄISCHE PATENTSCHRIFT

(11) **EP 3 061 147 B1**
(45) Veröffentlichungstag und Bekanntmachung des Hinweises auf die Patenterteilung: **13.12.2017**
(21) Anmeldenummer: 14792388.2
(22) Anmeldetag: 14.10.2014
(51) Int. Cl.: H01M 8/04

(54) **VERFAHREN BEIM HERUNTERFAHREN ZUR STARTVORBEREITUNG EINES BRENNSTOFFZELLENSYSTEMS**
PROCESS DURING SHUT DOWN AS START PREPARATION OF A FUEL CELL SYSTEM
PROCÉDÉ PENDANT LA DÉSACTIVATION COMME PRÉPARATION DU DÉMARRAGE D'UN SYSTÈME DE PILE À COMBUSTIBLE

(30) Priorität: 22.10.2013 DE 102013017543
(43) Veröffentlichungstag der Anmeldung: 31.08.2016
(73) Patentinhaber: Daimler AG, 70327 Stuttgart (DE)
(72) Erfinder: RICHTER, Holger, 73230 Kirchheim (DE); MÜTSCHELE, Armin, 73235 Weilheim an der Teck (DE)
(74) Vertreter: JENSEN & SON
(86) Internationale Anmeldenummer: PCT/EP2014/002772
(87) Internationale Veröffentlichungsnummer: WO 2015/058842

(56) Entgegenhaltungen:
- DE-A1-102012 001 947
- DE-T5-112007 000 300
- US-A1- 2006 222 924
- US-A1- 2010 028 728

## Beschreibung

Die Erfindung betrifft ein Verfahren zum Vorbereiten eines Brennstoffzellensystems auf einen Startvorgang nach der im Oberbegriff von Anspruch 1 näher definierten Art.

Brennstoffzellensysteme sind aus dem allgemeinen Stand der Technik bekannt. Sie können beispielsweise in Fahrzeugen zur Bereitstellung von elektrischer Antriebsleistung eingesetzt werden. Eines der Probleme von Brennstoffzellensystemen liegt dabei in der Entstehung von sehr reinem Wasser in dem Brennstoffzellensystem während des Betriebs. Kommt es nun zu Temperaturen unterhalb des Gefrierpunkts, was insbesondere bei Fahrzeuganwendungen unvermeidbar auftreten wird, dann kann das Brennstoffzellensystem einfrieren und macht bei einem erneuten Startvorgang dann entsprechende Probleme beziehungsweise es benötigt sehr lange, bis das Brennstoffzellensystem gestartet werden kann. Dies liegt daran, dass aufgrund von auskondensierter und gefrorener Feuchtigkeit beispielsweise Gasleitungskanäle und/oder Ventile blockiert und andere Bauteile durch die Eisbildung in ihrer Funktion beeinträchtigt sein können.

Um dieser Problematik entgegenzuwirken ist es aus dem allgemeinen Stand der Technik bekannt, dass zum Vorbereiten eines Brennstoffzellensystems auf einen Startvorgang beim Abschalten des Brennstoffzellensystems eine Startvorbereitungsroutine durchgeführt wird, um Wasser und Feuchtigkeit aus dem Brennstoffzellensystem auszutragen. Typischerweise wird das Brennstoffzellensystem dabei mit Gas gespült, welches beispielsweise durch die Luftfördereinrichtung und/oder ein Wasserstoffrezirkulationsgebläse oder ein andersartiges Gebläse gefördert wird. Hierdurch wird Feuchtigkeit aus dem Brennstoffzellensystem ausgeblasen und eventuelle Wasserabscheider und dergleichen können geleert und durchspült werden, um auch hier möglichst viel Feuchtigkeit auszutragen. Nun ist es so, dass Brennstoffzellensysteme beim Abstellen und dem danach folgenden Abschaltprozess typischerweise noch sehr warm sind, sodass gegebenenfalls Dampf in dem Brennstoffzellensystem verbleibt, welcher später noch auskondensiert, und, sofern die Temperaturen dann unter den Gefrierpunkt fallen, ebenfalls zu den oben beschriebenen Problemen führen kann. Aus dem weiteren allgemeinen Stand der Technik ist es daher ergänzend oder alternativ zu der oben beschriebenen Startvorbereitungsroutine auch bekannt, eine Startvorbereitungsroutine im Stillstand des Brennstoffzellensystems durchzuführen. Hierfür wird das Brennstoffzellensystem beispielsweise beim Abfall der Umgebungstemperatur unter einen vorgegebenen Grenzwert aufgeweckt, um dann die Startvorbereitungsroutine durchzuführen und das System zu trocknen. Im Gegensatz zum Trocknen unmittelbar nach dem Abstellen des Brennstoffzellensystems hat diese häufig auch als Konditionierung bzw. Stillstandskonditionierung bezeichnete Startvorbereitungsroutine den Vorteil, dass später noch auskondensiertes Wasser mit entfernt werden kann. Deshalb ist es auch durchaus sinnvoll, beide Routinen durchzuführen.

Typischerweise wird gemäß dem allgemeinen Stand der Technik die Startvorbereitungsroutine immer nach demselben Muster ablaufen, indem eine vorgegebene Menge an Gas, beispielsweise an Luft, durch das Brennstoffzellensystem gefördert wird, um Feuchtigkeit auszutragen und Wasser auszublasen. Um dies zu erreichen lässt man zum Beispiel alle Gasfördereinrichtungen bei konstanter Drehzahl für eine fest vorgegebene Zeit laufen. Die Menge ist dabei typischerweise immer so ausgelegt, dass eine sichere und zuverlässige Trocknung in jedem Fall erzielt werden kann.

Aus der DE 10 2007 050 856 A1 ist ein Verfahren bekannt, welches das Spülen sehr aufwändig in Abhängigkeit einer Membranhydratisierung und durchschnittlicher auftretender Stromdichte Zeitprofile und dergleichen durchführt. Dies ist außerordentlich aufwändig und komplex und kann insbesondere für eine Startvorbereitungsroutine, welche zur Stillstandskonditionierung durchgeführt wird, nur mit erheblichem Aufwand zur Erfassung der benötigten Messwerte betrieben werden.

Aus dem gattungsgemäßen Stand der Technik, welcher sowohl durch die DE 11 2007 000 300 T5, die US 2006/222924 A1 als auch die DE 10 2012 01947 A1 gebildet wird, ist außerdem ein Verfahren mit den Merkmalen im Oberbegriff des Anspruchs 1 bekannt, bei welchem die Startvorbereitungsroutine anhand von Messwerten, welche während des Betriebs des Brennstoffzellensystems erfasst worden sind, angepasst wird.

Die Aufgabe der hier vorliegenden Erfindung ist es nun, ein Verfahren zum Vorbereiten eines Brennstoffzellensystems auf einen Startvorgang unter Verwendung einer Startvorbereitungsroutine anzugeben, welches sehr einfach und effizient funktioniert und dabei sehr schnell, leise und energieeffizient durchgeführt werden kann.

Erfindungsgemäß wird diese Aufgabe durch die Merkmale im kennzeichnenden Teil des Anspruchs 1 gelöst. Weitere vorteilhafte Ausgestaltungen des Verfahrens ergeben sich aus den restlichen abhängigen Unteransprüchen.

Bei dem erfindungsgemäßen Verfahren ist es vorgesehen, dass die Startvorbereitungsroutine in Abhängigkeit von Messwerten in dem Brennstoffzellensystem verändert wird. Diese Messwerte werden dabei innerhalb eines vorgegebenen Zeitintervalls vor dem Abstellen des Brennstoffzellensystems erfasst. Vor dem Abstellen des Brennstoffzellensystems, wenn dieses noch in Betrieb ist, lassen sich Messwerte sehr einfach erfassen bzw. liegen für bestimmte Steuerungsaufgaben und zur Beeinflussung von Betriebsabläufen in dem Brennstoffzellensystem typischerweise ohnehin vor. Diese ohnehin vorliegenden Messwerte oder die einfach zu erfassenden Messwerte, können dann genutzt werden, um die Systemvorbereitungsroutine entsprechend anzupassen. Die Idee dahinter ist im Kern die, dass bei einer Volllastsituation des Brennstoffzellensystems, beispielsweise in einem Zeitintervall von etwa 15 Minuten vor dem Abstellen des Brennstoffzellensystems, sehr viel weniger Feuchtigkeit in dem Brennstoffzellensystem verblieben ist, da Temperaturen und Volumenströme relativ hoch sind. Dann wird auf eine Startvorbereitungsroutine ganz verzichtet werden, oder diese wird entsprechend kurz bzw. mit niedrigen Drehzahlen der Gasfördereinrichtungen zur Bereitstellung des Luftstroms zum Trocknen des Brennstoffzellensystems durchgeführt. Dies ist energieeffizient, schnell und leise. Lässt sich aus den in dem Zeitintervall vor dem Abstellen des Brennstoffzellensystems erfassten Messwerten hingegen erkennen, dass eine Teillastsituation oder eine extreme Niederlastsituation aufgetreten ist, dann ist mit einem sehr viel feuchteren Brennstoffzellensystem zu rechnen, sodass zum sorgfältigen Trocknen des Brennstoffzellensystems die Systemvorbereitungsroutine entsprechend länger und/oder mit höheren Drehzahlen der Gasfördereinrichtung durchgeführt wird. Dazwischen existiert wenigstens eine Zwischenstufe. Dadurch, dass bei dem Verfahren also die Messwerte genutzt werden, welche innerhalb eines vorgegebenen Zeitintervalls vor dem Abstellen des Brennstoffzellensystems erfasst worden sind, kann, unabhängig von einer Messung während der Systemvorbereitungsroutine selbst, eine optimierte Systemvorbereitungsroutine verwendet werden, welche hinsichtlich Energiebedarf, Lärmemissionen und Zeit jeweils den Notwendigkeiten des Brennstoffzellensystems angepasst ist.

In einer sehr vorteilhaften Weiterbildung des erfindungsgemäßen Verfahrens ist es dabei vorgesehen, dass die Messwerte Kühlwassertemperaturen in dem Brennstoffzellensystem umfassen. Neben der reinen Auswertung von Lastanforderungen sind insbesondere Kühlwassertemperaturen in dem Brennstoffzellensystem sehr einfach und effizient zu erfassende Werte, welche mittelbar mit den Lastanforderungen und unmittelbar mit der Situation hinsichtlich der Feuchtigkeit, welche nach dem Abstellen des Brennstoffzellensystems vorliegt, zusammenhängen. Für die Erfassung von Kühlwasserwerten lässt sich also sehr einfach und effizient eine geeignete Startvorbereitungsroutine auswählen.

In einer vorteilhaften Weiterbildung hiervon kann es dabei vorgesehen sein, dass verschiedene Kühlwassertemperaturschwellwerte vorgegeben werden, wobei die Messwerte die Zeit, für welche die Kühlwassertemperatur oberhalb des jeweiligen Kühlwassertemperaturschwellwerts lag, umfassen. Lag beispielsweise die Kühlwassertemperatur innerhalb der letzten 15 Minuten des Betriebs des Brennstoffzellensystems zu 80 % oberhalb eines oberen Kühlwassertemperaturschwellwerts von beispielsweise 60° C, dann kann eine sehr viel kürzere Systemvorbereitungsroutine durchgeführt werden, als wenn die Kühlwassertemperatur lediglich zu 10 % oberhalb dieses oberen Kühlwassertemperaturschwellwerts lag und in der restlichen Zeit oberhalb eines tieferen Kühlwassertemperaturschwellwerts.

In einer sehr günstigen Weiterbildung des erfindungsgemäßen Verfahrens ist es dabei nun ferner vorgesehen, dass die Messwerte in einzelne Klassen je nach Lastsituation und/oder Kühlwassertemperatur des Brennstoffzellensystems innerhalb des Zeitintervalls eingeteilt werden. Jeder der Klassen ist dann ein vorgegebener Ablauf der Systemvorbereitungsroutine zugeordnet. Eine solche Einteilung in Klassen kann unmittelbar beim Abstellen des Brennstoffzellensystems erfolgen. So kann beispielsweise eine Einteilung in fünf unterschiedliche Klassen erfolgen, welche symbolisch für Volllast, Niedriglast, geringe Teillast, mittlere Teillast und hohe Teillast stehen. Je nach Lastsituation kann dann eine geeignete Systemvorbereitungsroutine beim Abstellen des Brennstoffzellensystems und idealerweise bei einer später gegebenenfalls in Abhängigkeit der Temperatur, stattfindenden Stillstands-Konditionierung durchgeführt werden. Idealerweise können die Messwerte bzw. die Klassen, in welche die Messwerte eingeteilt sind, dabei über ein Kennfeld mit den verschiedenen Systemvorbereitungsroutinen verknüpft werden.

Weitere vorteilhafte Ausgestaltungen des erfindungsgemäßen Verfahrens ergeben sich aus den restlichen abhängigen Unteransprüchen und werden anhand eines Ausführungsbeispiels deutlich, welches nachfolgend unter Bezugnahme auf die Figuren näher beschrieben ist.

Dabei zeigen:
- Fig. 1: ein Fahrzeug mit einem Brennstoffzellensystem, welches zur Durchführung des erfindungsgemäßen Verfahrens geeignet ist; und
- Fig. 2: ein sehr stark vereinfacht dargestelltes Kennfeld, welches zur Durchführung des erfindungsgemäßen Verfahrens eingesetzt werden kann.

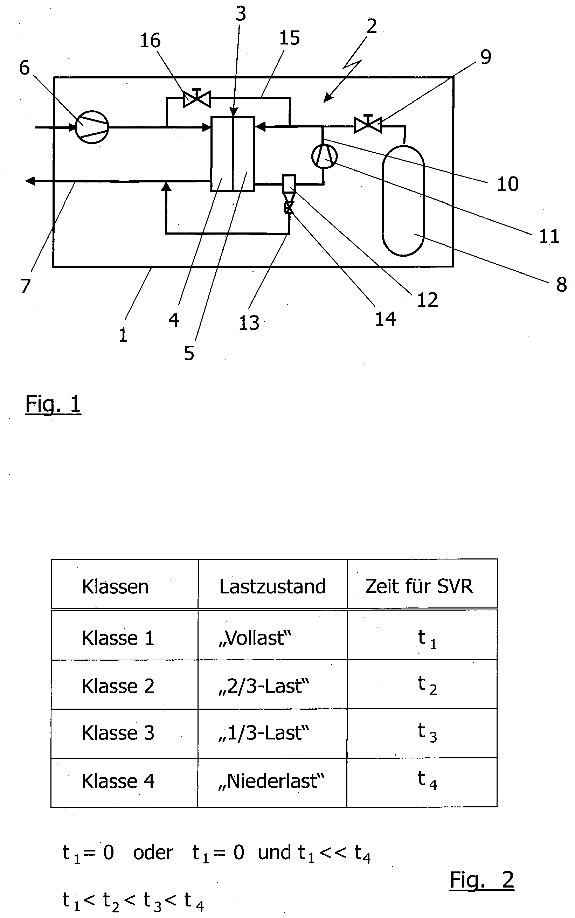

In der Darstellung der Figur 1 ist ein Fahrzeug 1 sehr stark schematisiert angedeutet. Das Fahrzeug 1 kann beispielsweise als Personenkraftwagen, Lastkraftwagen, als schienengebundenes Fahrzeug oder als Flurförderfahrzeug für Logistikzwecke ausgebildet sein. Genauso gut könnte das Fahrzeug 1 beispielsweise als Schiff oder Luftfahrzeug eingesetzt werden. In dem Fahrzeug 1 befindet sich ein prinzipmäßig angedeutetes Brennstoffzellensystem 2, dessen Kern eine Brennstoffzelle 3 bildet. Diese Brennstoffzelle 3 soll als Stapel von PEM-Einzelzellen aufgebaut sein, als sogenannter Brennstoffzellenstapel bzw. Brennstoffzellenstack. Symbolisch ist innerhalb der Brennstoffzelle 3 ein Kathodenraum 4 sowie ein Anodenraum 5 angedeutet. Dem Kathodenraum 4 wird für den regulären Betrieb Luft über eine Luftfördereinrichtung 6 als Sauerstofflieferant zugeführt. Abluft gelangt über eine Abluftleitung 7 aus dem Brennstoffzellensystem 2. Dem Anodenraum 5 der Brennstoffzelle 3 wird Wasserstoff aus einem Druckgasspeicher 8 über eine Druckregel- und Dosiereinheit 9 zugeführt. Nicht verbrauchter Wasserstoff sowie Inertgase und Wasser, welche im Bereich des Anodenraums 5 entstehen, werden über eine Rezirkulationsleitung 10 zurückgeführt und können vermischt mit frischem Wasserstoff dem Anodenraum 5 erneut zugeführt werden. In der Rezirkulationsleitung 10 ist dabei eine Rezirkulationsfördereinrichtung 11 angeordnet, welche in dem hier dargestellten Ausführungsbeispiel als Wasserstoffrezirkulationsgebläse bzw. HRB (Hydrogen Recirculation Blower) ausgebildet ist. Die Rezirkulationsfördereinrichtung 11 könnte dabei genauso gut als Gasstrahlpumpe oder als Kombination aus einer Gasstrahlpumpe und einem Gebläse realisiert sein. Außerdem befindet sich in der Rezirkulationsleitung 10 ein Wasserabscheider 12, welcher über eine Ablassleitung 13 mit einer Ventileinrichtung 14 mit der Abluftleitung 7 aus dem Brennstoffzellensystem 2 verbunden ist. Über den Wasserabscheider 12 und die Ventileinrichtung 14 kann so Wasser gesammelt und beispielsweise von Zeit zu Zeit abgelassen werden. Genauso gut ist es denkbar, das Wasser in Abhängigkeit eines Füllstands in dem Wasserabscheider oder in Abhängigkeit von Konzentrationen in dem sogenannten Anodenkreislauf abzulassen. Zusammen mit dem Wasser 14 kann außerdem Gas mit abgelassen werden, da sich in dem Anodenkreislauf mit der Zeit Inertgas, welches durch die Membranen der Brennstoffzelle 3 vom Kathodenraum 4 in den Anodenraum 5 diffundiert ist, anreichert. Da hierdurch die Wasserstoffkonzentration in dem in seinem Volumen konstanten Anodenkreislauf sinken würde, muss dieses Gas ebenfalls mit abgelassen werden. Dies kann über eine eigene Leitung erfolgen oder zusammen mit dem Wasser über die Ablassleitung 13 und die Ventileinrichtung 14.

In der Darstellung der Figur 1 ist nun außerdem eine Verbindungsleitung 15 mit einer Ventileinrichtung 16 zu erkennen, welche den Anodenkreislauf mit einer Zuluftleitung 17 zu dem Kathodenraum 4 der Brennstoffzelle 3 verbindet. Über die Verbindungsleitung 15 kann bei geöffneter Ventileinrichtung 16 so eine Verbindung zwischen der Kathodenseite und der Anodenseite des Brennstoffzellensystems 2 geschaffen werden. Die Verbindungsleitung 15 kann je nach Anordnung und Ausführung beispielsweise auch dazu genutzt werden, parallel zum Ablassen von Wasser über den Wasserabscheider 12 und die Ablassleitung 13 das Gas abzulassen, wobei der Verzweigungspunkt dann typischerweise zwischen dem Wasserabscheider 12 und der Rezirkulationsfördereinrichtung 11 angeordnet wäre. Das Einleiten des abgeblasenen Gases in die Zuluftleitung 17 ist dabei allgemein bekannt und üblich, da so eventueller Wasserstoff, welcher typischerweise immer in kleinen Mengen mit abgelassen wird, am Katalysator des Kathodenraums 4 reagiert und Wasserstoffemissionen an die Umgebung so vermieden werden können.

Für eine Startvorbereitungsroutine SVR, welche beispielsweise nach dem Abstellen des Brennstoffzellensystems 2 während des Abschaltens desselben durchgeführt wird, oder welche in Form einer Stillstands-Konditionierung durchgeführt wird, sobald Temperaturen in der Umgebung des Fahrzeugs 1 unter einen vorgegebenen Schwellenwert von beispielsweise 3° C fallen, wird nun so durchgeführt, dass idealerweise die Luftfördereinrichtung 6 und die Rezirkulationsfördereinrichtung 11 mit einer vorgegebenen Drehzahl beispielsweise mit Leistung aus einer hier nicht dargestellten Batterie betrieben werden. Hierdurch wird zuerst der Kathodenraum 4 entsprechend durchspült und im Anodenkreislauf wird eine Kreislaufströmung aufgebaut. Wird die Ventileinrichtung 16 an der Verbindungsleitung dann geöffnet, wird auch die Anodenseite entsprechend von der trockenen Luft durchspült, wobei idealerweise Luft und Wasser über den Wasserabscheider 12 und die Wasserablassleitung 13 bei geöffneter Ventileinrichtung 14 abgeblasen werden. Hierdurch wird das Brennstoffzellensystem 2 entsprechend getrocknet und kann für einen Wiederstart, auch wenn dabei Temperaturen unterhalb des Gefrierpunkts vorliegen, ideal vorbereitet werden.

Die Startvorbereitungsroutine, egal ob sie beim Abschalten des Brennstoffzellensystems nach dem Abstellen durchgeführt wird, oder in Form einer Stillstandskonditionierung, während das Brennstoffzellensystem 2 bzw. das Fahrzeug 1 nicht in Betrieb ist, ist dabei immer mit dem entsprechenden Energiebedarf für die Luftfördereinrichtung 6 bzw. die Rezirkulationsfördereinrichtung 11 verbunden und verursacht über den Zeitraum t, über den die Startvorbereitungsroutine läuft, eine entsprechende Lärmemission. Um nun sowohl den Energiebedarf als auch die Lärmemissionen abzusenken, kann in dem Brennstoffzellensystem 1 während des Betriebs eine Reihe von Messwerten erfasst und gespeichert werden. Diese Messwerte können beispielsweise die Lastanforderungen an das Brennstoffzellensystem 2 seitens des Fahrzeugs 1 sein. Insbesondere können jedoch Temperaturen im Kühlwasser des Brennstoffzellensystems 2 erfasst werden. Besonders einfach und effizient ist es dabei, wenn Kühlwassertemperaturschwellenwerte vorgegeben werden, beispielsweise zwei oder drei unterschiedliche Schwellenwerte in dem Temperaturbereich, welcher während des regulären Betriebs normalerweise auftritt. Nun ist es so, dass während des Betriebs des Brennstoffzellensystems 2 jeweils sehr einfach und effizient mitprotokolliert werden kann, für welche Zeitspannen die Kühlwassertemperatur oberhalb der vorgegebenen Schwellenwerte liegt. Wird das Brennstoffzellensystem 2 bzw. das Fahrzeug 1 nun abgestellt, dann kann rückwirkend für ein vorgegebenes Zeitintervall vor dem Abstellen, beispielsweise die letzten 15 Minuten vor dem Abstellen, eine Auswertung eben dieser mitgeschriebenen Werte erfolgen. Hierdurch lässt sich ein Temperaturprofil und damit zusammenhängend mittelbar ein Lastprofil des Brennstoffzellensystems 2 erstellen. Lag beispielsweise die Temperatur während 100 % der Zeit innerhalb des vorgegebenen Zeitintervalls oberhalb des höchsten Kühlwassertemperaturschwellenwerts, dann lag ein durchgängiger Volllastbetrieb des Brennstoffzellensystems 1 vor dem Abstellen vor. Lag die Kühlwassertemperatur während 100 % innerhalb des Zeitintervalls unterhalb des untersten vorgegebenen Kühlwassertemperaturschwellenwerts, dann lag ein 100%-iger Niederlastbetrieb vor. Dazwischen sind verschiedene Teillastbetriebe möglich, welche sich beispielsweise durch unterschiedliche Haltedauern der Kühlwassertemperatur oberhalb des einen oder anderen Kühlwassertemperaturschwellenwerts ergeben.

In der Darstellung der Figur 2 sind in den einzelnen Zeilen der Tabelle beispielhaft vier derartige Lastzustände zu erkennen, ganz oben ein Volllastzustand, ganz unten ein Niederlastzustand und dazwischen zwei Zustände, welche beispielsweise 1/3-Last- und 2/3-Last symbolisieren sollen. Bei Abstellen des Systems vor dem eigentlichen Abschaltvorgang werden diese Werte ausgewertet und in die hier dargestellten Klassen, beispielsweise die Klasse 1 für Volllast und die Klasse 4 für Niederlast, eingeteilt. Die danach anlaufende Startvorbereitungsroutine SVR und/oder die später gegebenenfalls noch ablaufende Startvorbereitungsroutine SVR, wenn die Temperaturen in der Umgebung des Fahrzeugs 1 unter die vorgegebene Grenztemperatur fallen, kann dann beispielsweise zeitgesteuert so ablaufen, dass der Klasse 1 eine Zeit t₁ zugeordnet ist, der Klasse 2 eine Zeit t₂ usw. Dabei liegt nach einem Volllastbetrieb des Brennstoffzellensystems 2 eine Situation vor, in welcher eine Startvorbereitungsroutine eigentlich nicht zwingend nötig ist oder sehr stark verkürzt werden kann. Die Zeit t₁ kann damit entweder 0 sein oder von 0 verschieden sein, ist dann jedoch sehr viel kleiner als die Zeit t₄ der Klasse 4, welche der Niederlastsituation vor dem Abstellen des Brennstoffzellensystems 2 entspricht. Typischerweise sind die Zeiten dabei so gestaffelt, dass die Zeit t₁ < t₂ < t₃ < t₄ ist. Hierdurch ist es möglich in Abhängigkeit des Betriebs des Brennstoffzellensystems 2 vor dem Abstellen sehr einfach und effizient eine Startvorbereitungsroutine SVR auszuwählen, welche zur Minimierung des Energiebedarfs, der Lärmemissionen und der Dauer der Startvorbereitungsroutine SVR insofern geeignet ist, als ihre für den jeweiligen Lastzustand vor dem Abstellen typische Zeitspanne t zur Durchführung der Startvorbereitungsroutine SVR angewandt wird. Hierdurch können je nach Lastsituation des Brennstoffzellensystems deutliche Verkürzungen gegenüber einem Aufbau erreicht werden, welcher jeweils mit der der Klasse 4 entsprechenden Systemvorbereitungsroutine arbeitet, da eine solche zum Sicherstellen der Kaltstartfähigkeit auch in allen gegebenenfalls auftretenden "Worst Case" Szenarien dringend notwendig ist.

Neben dem hier beschriebenen Fall, wobei die einzelnen Startvorbereitungsroutinen SVR sich lediglich durch ihre Zeitdauern t unterscheiden, ist es im Prinzip auch möglich, alternativ oder ergänzend zur Zeitdauer t die auftretenden Drehzahlen zu variieren.

Ferner kann je nach Klasse beispielsweise als Startvorbereitungsroutine SVR beim Abschalten des Brennstoffzellensystems 2 und als Startvorbereitungsroutine SVR zur Stillstandskonditionierung des Brennstoffzellensystems 2 dieselbe Routine eingesetzt werden. Es ist jedoch auch denkbar, hier unterschiedliche Routinen anzuwenden, beispielsweise mit unterschiedlichen Zeiten oder für den Fall der Stillstandskonditionierung mit entsprechend niedrigeren Drehzahlen, um den Leistungsbedarf und die Lärmemissionen zu reduzieren. Auch können den unterschiedlichen Klassen unterschiedliche Abläufe der Startvorbereitungsroutine SVR zugeordnet werden, beispielsweise unterschiedliche Druckverläufe oder unterschiedliche Zeiten, zu welchen beispielsweise die Ventileinrichtungen 14, 16 geöffnet bzw. geschlossen werden.

## Patentansprüche

1. Verfahren zur Vorbereitung eines Brennstoffzellensystems (2) auf einen Startvorgang, wobei beim Abschalten des Brennstoffzellensystems (2) und/oder beim Unterschreiten eines vorgegebenen Temperaturgrenzwerts eine Startvorbereitungsroutine (SVR) durchgeführt wird, um Wasser und Feuchtigkeit aus dem Brennstoffzellensystem (2) auszutragen, wobei die Startvorbereitungsroutine (SVR) in Abhängigkeit von Messwerten, welche innerhalb eines vorgegebenen Zeitintervalls vor dem Abstellen des Brennstoffzellensystems (2) erfasst worden sind, verändert wird, und wobei die Startvorbereitungsroutine (SVR) hinsichtlich ihrer zeitlichen Dauer (t) und/oder hinsichtlich von Drehzahlen von Gasfördereinrichtungen (6, 11) in Abhängigkeit der Messwerte verändert wird, **dadurch gekennzeichnet, dass**
beim Betrieb des Brennstoffzellensystems (2) mit hoher Last in dem Zeitintervall die Startvorbereitungsroutine (SVR) zeitlich sehr kurz und/oder mit niedriger Drehzahl vorgegeben oder gar nicht durchgeführt wird, wobei beim Betrieb des Brennstoffzellensystems (2) mit geringer Last die Startvorbereitungsroutine (SVR) zeitlich mit maximaler Länge und/oder hoher Drehzahl durchgeführt wird, und wobei dazwischen wenigstens eine Zwischenstufe existiert.

2. Verfahren nach Anspruch 1,
**dadurch gekennzeichnet, dass**
die Messwerte Lastanforderungen an das Brennstoffzellensystem (2) zumindest mittelbar erfassen.

3. Verfahren nach Anspruch 1 oder 2,
**dadurch gekennzeichnet, dass**
die Messwerte Kühlwassertemperaturen in dem Brennstoffzellensystem (2) umfassen.

4. Verfahren nach Anspruch 3,
**dadurch gekennzeichnet, dass**
verschiedene Kühlwassertemperaturschwellwerte vorgegeben werden, wobei die Messwerte die Zeit, für welche die Kühlwassertemperatur oberhalb des jeweiligen Kühltemperaturschwellwerts lag, umfassen.

5. Verfahren nach einem der Ansprüche 1 bis 4,
**dadurch gekennzeichnet, dass**
die Messwerte in einzelne Klassen je nach Lastsituation und/oder Kühlwassertemperatur des Brennstoffzellensystems (2) innerhalb des Zeitintervalls eingeteilt werden, wobei jeder Klasse ein vorgegebener Ablauf der Startvorbereitungsroutine (SVR) zugeordnet wird.

6. Verfahren nach einem der Ansprüche 1 bis 5,
**dadurch gekennzeichnet, dass**
das Zeitintervall mit 5 - 20 Minuten vor dem Abstellen des Brennstoffzellensystems (2) vorgegeben wird.

7. Verfahren nach einem der Ansprüche 1 bis 6,
**dadurch gekennzeichnet, dass**
die Messwerte bzw. Klassen, in welche die Messwerte eingeteilt sind, über ein Kennfeld mit verschiedenen Startvorbereitungsroutinen (SVR) verknüpft werden.

## Claims

1. Method for preparing a fuel cell system (2) for a starting operation, wherein a start preparation routine is carried out, in order to discharge water and moisture from the fuel cell system (2), when the fuel cell system (2) is switched off and / or when the temperature is below a predetermined temperature threshold value, wherein the start preparation routine is changed as a function of measured values, which have been detected within a predetermined time interval before the fuel cell system (2) is switched off, and wherein the start preparation routine is changed with respect to its time duration (t) and / or with respect to speeds of gas conveying means (6, 11) as a function of the measured values,
**characterised in that**
when the fuel cell system (2) is operated at high load in the time interval the start preparation routine is predetermined with a very short duration and / or with a low speed, or it is not carried out at all, wherein when the fuel cell system (2) is operated at low load the start preparation routine is carried out with the maximum duration and / or high speed, and wherein there is at least one intermediate stage between them.

2. Method according to claim 1,
**characterised in that**
the measured values at least indirectly detect load requirements of the fuel cell system (2).

3. Method according to claim 1 or 2,
**characterised in that**
the measured values include cooling water temperatures in the fuel cell system (2).

4. Method according to claim 3,
**characterised in that**
different cooling water temperature threshold values are predetermined, wherein the measured values include the time, during which the cooling water temperature was above the respective cooling water temperature threshold value.

5. Method according to one of claims 1 to 4,
**characterised in that**
the measured values are divided into individual categories depending on the load situation and / or cooling water temperature of the fuel cell system (2) within the time interval, wherein a predetermined execution of the start preparation routine is assigned to each category.

6. Method according to one of claims 1 to 5,
**characterised in that**
the time interval is predetermined as 5 - 20 minutes before the fuel cell system (2) is switched off.

7. Method according to one of claims 1 to 6,
**characterised in that**
the measured values or categories, into which the measured values are divided, are linked, via a characteristic map, to different start preparation routines.

## Revendications

1. Procédé destiné à préparer un dispositif (2) de piles à combustible à une phase de démarrage, lors de l'arrêt du dispositif (2) de pile à combustibles et/ou lorsque la température passe au-dessous de la valeur limite de température prédéfinie, une routine de préparation de démarrage (SVR) est exécutée, pour chasser l'eau et l'humidité du dispositif (2) de pile à combustible, la routine de préparation de démarrage (SVR) étant modifiée en fonction des valeurs mesurées, qui ont été enregistrées dans un intervalle de temps prédéfini avant l'arrêt du dispositif (2) de pile à combustible, et la routine de préparation de démarrage (SVR) étant modifiée par rapport à sa durée temporelle (t) et/ou par rapport aux vitesses des dispositifs d'acheminement de gaz (6, 11) en fonction des valeurs mesurées, **caractérisé en ce que** lors du fonctionnement du système (2) de piles à combustible à une charge élevée dans un intervalle de temps la routine de préparation de démarrage (SVR) est très courte dans le temps et/ou est prédéfinie à une vitesse réduite ou n'est pas du tout exécutée, lors du fonctionnement du dispositif (2) de pile à combustible à faible charge la routine de préparation de démarrage (SVR) étant exécutée dans le temps à une longueur maximale et/ou à une vitesse élevée, et un stade intermédiaire existant entre temps.

2. Procédé selon la revendication 1, **caractérisé en ce que** les valeurs mesurées enregistrent au moins directement des exigences de charge sur le dispositif (2) de pile à combustible.

3. Procédé selon la revendication 1 ou la revendication 2, **caractérisé en ce que** les valeurs mesurées comprennent des températures d'eau de refroidissement dans le dispositif (2) de piles à combustible.

4. Procédé selon la revendication 3, **caractérisé en ce que** différentes valeurs de seuil de température d'eau de refroidissement sont prédéfinies, les valeurs mesurées comprenant, le temps durant lequel la température de l'eau de refroidissement est supérieure à la valeur de seuil de température de l'eau de refroidissement.

5. Procédé selon l'une quelconque des revendications 1 à 4, **caractérisé en ce que** les valeurs mesurées dans chacune des classes en fonction de la situation de charge et/ou de la température de l'eau de refroidissement du dispositif (2) de pile à combustible sont divisées dans un intervalle de temps, chaque classe étant associée à un déroulement prédéfini de la routine de préparation de démarrage (SVR).

6. Procédé selon l'une quelconque des revendications 1 à 5, **caractérisé en ce que** l'intervalle de temps étant défini entre 5 et 20 minutes avant l'arrêt du dispositif (2) de pile à combustible.

7. Procédé selon l'une quelconque des revendications 1 à 6, **caractérisé en ce que** les valeurs mesurées ou les classes dans lesquelles sont divisées les valeurs mesurées, sont combinées au moyen d'un diagramme caractéristique aux différentes routines de préparation de démarrage (SVR).
